# FASCICULE DE BREVET EUROPEEN

(11) **EP 3 645 855 B1**
(45) Date de publication et mention de la délivrance du brevet: **12.05.2021**
(21) Numéro de dépôt: 18749011.5
(22) Date de dépôt: 26.06.2018
(51) Int. Cl.: F02K 1/72, F02K 1/76

(54) **NACELLE POUR TURBOREACTEUR COMPORTANT UN INVERSEUR DE POUSSEE A GRILLES**
GONDEL FÜR EINEN TURBOLADER MIT EINEM KASKADENARTIGEN SCHUBUMKEHRER
NACELLE FOR A TURBOJET COMPRISING A CASCADE-TYPE THRUST REVERSER

(30) Priorité: 30.06.2017 FR 1756141
(43) Date de publication de la demande: 06.05.2020
(73) Titulaire: Safran Nacelles, 76700 Gonfreville-l'Orcher (FR)
(72) Inventeur: CARUEL, Pierre, 76700 Gonfreville L'Orcher (FR)
(74) Mandataire: Delorme, Nicolas
(86) Numéro de dépôt international: PCT/FR2018/051560
(87) Numéro de publication internationale: WO 2019/002753

(56) Documents cités:
- EP-A1- 3 018 328
- GB-A- 866 900

## Description

La présente invention concerne une nacelle prévue pour un turboréacteur, comportant un inverseur de poussée à grilles délivrant un flux d'air froid vers l'avant.

Les turboréacteurs de motorisation des aéronefs disposés suivant un axe longitudinal, insérés dans une nacelle, reçoivent de l'air frais venant du côté avant, et rejettent du côté arrière les gaz chauds issus de la combustion du carburant délivrant une poussée.

Pour les turboréacteurs à double flux, des aubes de soufflante disposées autour du moteur génèrent un flux secondaire important d'air froid le long d'une veine annulaire passant entre ce moteur et la nacelle, qui engendre la majeure partie de la poussée.

Certaines nacelles comportent un système d'inversion de poussée qui ferme au moins en partie la veine annulaire d'air froid, et rejette le flux secondaire radialement vers l'extérieur en le dirigeant vers l'avant afin de générer une poussée inversée de freinage de l'aéronef.

Un type d'inverseur de poussée à grilles connu, présenté notamment par le document US-A1-20160160799, comporte des capots mobiles arrière coulissant axialement vers l'arrière sous l'effet de vérins, pour ouvrir des passages d'air latéraux sur la nacelle contenant des grilles.

Les capots arrière sont reliés par des biellettes de commande montées sur des articulations, décrivant des courbes dans un plan axial, aux grilles d'inversion de poussée entraînées vers l'arrière, et à des volets de fermeture du flux principal.

Les biellettes sont disposées pour obtenir une translation des grilles vers l'arrière moins importante que celle des capots, et un basculement des volets dans la veine annulaire d'air froid qui ferme au moins en partie cette veine en dirigeant le flux radialement vers l'extérieur au travers des grilles renvoyant ce flux vers l'avant.

Toutefois ce type d'inverseur de poussée comportant des biellettes disposées en dessous des grilles, décrivant des courbes dans un plan axial, occupe un volume relativement important en dessous de ces grilles qui ne permet pas d'optimiser les formes aérodynamiques de la veine annulaire, ainsi que son garnissage de panneaux insonorisant. Le document EP3018328 A1 divulgue une nacelle d'un turboréacteur connue de l'art antérieur.

La présente invention a notamment pour but d'éviter ces inconvénients de la technique antérieure.

Elle propose à cet effet une nacelle pour turboréacteur comportant un inverseur de poussée comprenant des grilles d'inversion de poussée disposées autour de la nacelle, au moins un capot mobile adjacent à ces grilles dans une position fermée, un actionnement générant un mouvement de recul des grilles ou du capot vers une position ouverte, des systèmes de liaison reliant les capots mobiles et les grilles, et des volets basculants de fermeture de la veine annulaire d'air froid, cette nacelle étant remarquable en ce que chaque système de liaison disposé radialement à l'extérieur des grilles, comporte dans un plan tangentiel un levier, des bielles, et des articulations autorisant des mouvements sensiblement dans ce plan, comprenant une articulation fixe liée à la structure fixe de la nacelle, une articulation de grille liée aux grilles et une articulation de capot liée à au moins un capot mobile, ce système de liaison donnant en fin de mouvement d'ouverture une course du capot mobile plus importante que celle des grilles. Selon l'invention, chaque système de liaison comporte un premier levier comprenant deux bras formant un « V », et deux bielles fixées chacune au bout d'un bras par une articulation. Ce mécanisme simple est suffisant pour obtenir le mouvement différentiel des grilles et des capots.

Un avantage de cette nacelle est que chaque système de liaison disposé dans un plan tangentiel au-dessus des grilles, dégage tout l'espace en dessous de ces grilles permettant de disposer en dessous un mécanisme de commande des volets basculants, ce qui optimise les formes aérodynamiques de la veine d'air froid, ainsi que le garnissage des surfaces de cette veine par des matériaux insonorisant.

De plus chaque système de liaison réalise en fin de recul une course plus importante des capots par rapport aux grilles, permettant de dégager largement le passage d'air au travers de ces grilles. On peut utiliser de cette manière un unique système d'actionnement pour déplacer les grilles, qui entraîne à son tour le capot en présentant en fin de mouvement une course d'ouverture plus importante de ces capots.

La nacelle selon l'invention peut comporter de plus une ou plusieurs des caractéristiques suivantes, qui peuvent être combinées entre elles.

Avantageusement, la course du capot mobile est plus importante que celle des grilles à partir d'un mouvement de recul de ces grilles dépassant les 70% du recul total.

Dans ce cas, chaque levier peut comporter une articulation fixe disposée à la liaison des deux bras, reliée à un élément fixe de la structure de la nacelle, un bras arrière étant relié par une bielle de grille à une articulation fixée aux grilles, un bras avant étant relié par une bielle de capot à une articulation fixée à au moins un capot mobile.

En particulier, dans la position fermée chaque bielle peut former avec le bras le supportant un angle aigu.

En particulier, dans la position entièrement ouverte la bielle de grille peut former avec le bras arrière un angle sensiblement plat, et la bielle de capot avec le bras avant un angle obtus.

Avantageusement, la nacelle comporte des mécanismes de commande des volets basculants, qui dans la position fermée sont entièrement intégrés au-dessus de la surface intérieure de la veine d'air froid. De cette manière aucun élément mécanique ne vient perturber la veine d'air froid.

Dans ce cas, chaque mécanisme de commande d'un volet basculant est avantageusement relié uniquement au capot mobile et aux grilles, en étant actionné par un mouvement relatif entre ces deux ensembles. De cette manière on n'utilise pas d'actionneur supplémentaire pour le mouvement des volets basculants.

Ce mécanisme permet au volet d'échapper la structure fixe avant de basculer, grâce au mouvement relatif ne commençant qu'à environ 70% de la course des grilles.

En particulier, chaque mécanisme de commande peut comporter un deuxième levier fixé par une articulation aux grilles, relié par une première biellette aux capots mobiles, et relié par une deuxième biellette à un volet basculant.

Avantageusement, la nacelle comporte un bord de déviation formant un guidage annulaire de l'air froid disposé à l'avant des grilles, comprenant une partie radialement extérieure mobile fixée à l'avant des grilles, qui s'ajuste dans la position ouverte sur une partie radialement intérieure fixe.

L'invention sera mieux comprise et d'autres caractéristiques et avantages apparaîtront plus clairement à la lecture de la description ci-après donnée à titre d'exemple, en référence aux dessins annexés dans lesquels :
- les figures 1, 2 et 3 présentent une nacelle selon l'invention avec les capots fermés, comprenant respectivement une vue en coupe axiale, une vue en perspective et une vue de dessus d'une grille ;
- les figures 4, 5 et 6 présentent les mêmes vues avec une course des grilles de 80% ;
- les figures 7, 8 et 9 présentent les mêmes vues avec une course des grilles de 100% ;
- la figure 10 est un graphique présentant les courses des grilles et des capots ;
- les figures 11 et 12 présentent le mécanisme d'actionnement des volets de cette nacelle, avec des volets respectivement fermés et ouverts ;
- la figure 13 est un schéma présentant une biellette de ce mécanisme dans deux positions ; et
- les figures 14 et 15 présentent le bord de déviation du cadre avant mobile, pour une course des grilles respectivement de 80% et de 100%.

Pour plus de clarté, les éléments identiques ou similaires sont repérés par des signes de référence identiques sur l'ensemble des figures.

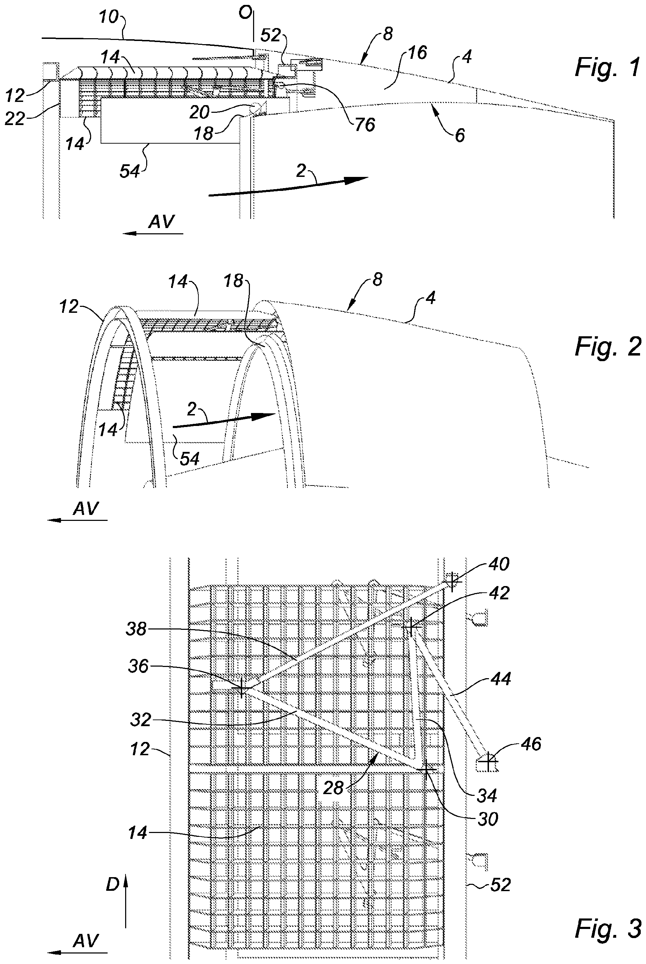

Les figures 1, 2 et 3 présentent une nacelle comportant un côté avant indiqué par la flèche AV, recouvrant une veine annulaire d'air froid 2, se terminant vers l'arrière par un ou plusieurs capots mobiles 4 comportant une surface intérieure acoustique 6 et une surface extérieure 8, formant entre elles un caisson intérieur 16.

Les capots mobiles 4 sont prolongés vers l'avant à l'extérieur de la nacelle, par des capots avant fixes 10, liés de manière fixe à la structure de la nacelle.

Des grilles d'inversion de poussée 14 disposées autour de la nacelle en avant des capots mobiles 4, fixées entre un cadre avant mobile circulaire 12 et un cadre arrière mobile circulaire 52, sont déplacées vers l'arrière par des vérins d'actionnement formant une motorisation, prenant appui sur une partie fixe de la nacelle.

Avec les capots mobiles 4 fermés présentés figure 1, 2 et 3, la majeure partie des grilles 14 est disposée sous les capots avant fixes 10, une petite partie arrière de ces grilles rentrant dans le caisson intérieur 16 des capots mobiles 4.

Un bord de déviation fixe annulaire 18 est disposé à l'intérieur des grilles 14, près de leur extrémité arrière. Dans la position fermée des capots mobiles 4, un joint d'étanchéité annulaire 20 disposé à l'extrémité avant de la surface intérieure 6 de ces capots, vient en appui sur l'arrière du bord de déviation fixe 18 pour assurer une étanchéité.

Des volets pivotants 54 sont fixés à plat sous les grilles 14, par des charnières 76 reliées au cadre arrière 52.

A l'extérieur des grilles 14, plusieurs systèmes de liaison reliant ces grilles 14 et les capots mobiles 4, comportent chacun un ensemble comprenant un levier et des bielles disposés dans un même plan tangent, qui sont reliés par des articulations telles que des pivots dont les axes sont sensiblement perpendiculaires à ce plan tangent.

Par convention un côté nommé côté droit, présenté figure 3 par la flèche D, correspond à la droite de cette figure en regardant vers l'avant.

Un pivot fixe 30 relié à un élément fixe de la structure de la nacelle, supporte un premier levier 28 formant un « V » comprenant un bras avant 32 et un bras arrière 34, qui sont reliés entre eux au niveau de ce pivot en formant un angle d'environ 60°. Le bras avant 32 est tourné vers l'avant, le bras arrière 34 est tourné vers la droite.

L'extrémité du bras arrière 34 du premier levier 28 reçoit par un premier pivot mobile 42 l'extrémité avant d'une bielle de grille 44, qui présente à son extrémité arrière un pivot 46 fixé aux grilles 14. Le bras arrière 34 et la bielle de grille 44 forment entre eux un angle aigu d'environ 30°.

L'extrémité du bras avant 32 du premier levier 28 reçoit par un deuxième pivot mobile 36 l'extrémité avant d'une bielle de capot 38, qui présente à son extrémité arrière un pivot 40 fixé aux capots mobiles 4. La bielle de capot 38 tournée vers l'arrière, forme avec le bras avant 32 un angle aigu d'environ 45°, dans cette première position.

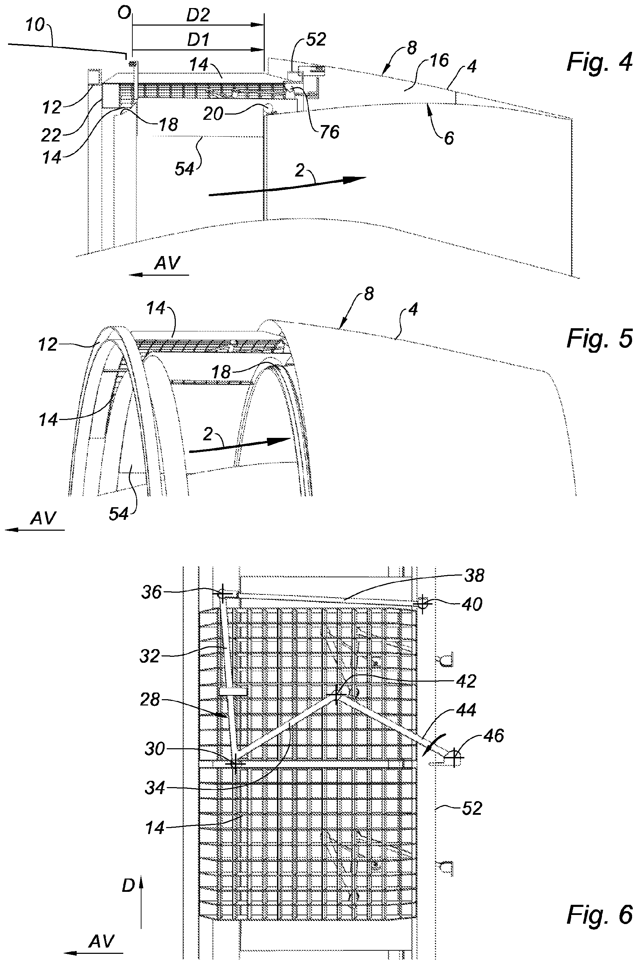

Les figures 4, 5 et 6 présentent un déplacement vers l'arrière des grilles 14 sous l'effet de leurs vérins d'actionnement, sur une course représentant 80% de leur déplacement total.

Le recul des grilles 14 a provoqué un recul identique du pivot de grille 46. La bielle de grille 44 a pivoté vers l'avant, entraînant un pivotement vers l'arrière du premier levier 28. La bielle de grille 44 forme maintenant avec le bras arrière 34 de ce levier 28 un angle obtus d'environ 120°.

Le bras avant 32 du premier levier 28 tourné vers la droite, forme sensiblement un angle droit avec la bielle de capot 38, entraînant le pivot de capot 40 ainsi que les capots mobiles 4 dans une course vers l'arrière sensiblement identique à celle des grilles 14.

On obtient les courses D1 et D2 présentées figure 4, pour respectivement les grilles 14 et les capots 4.

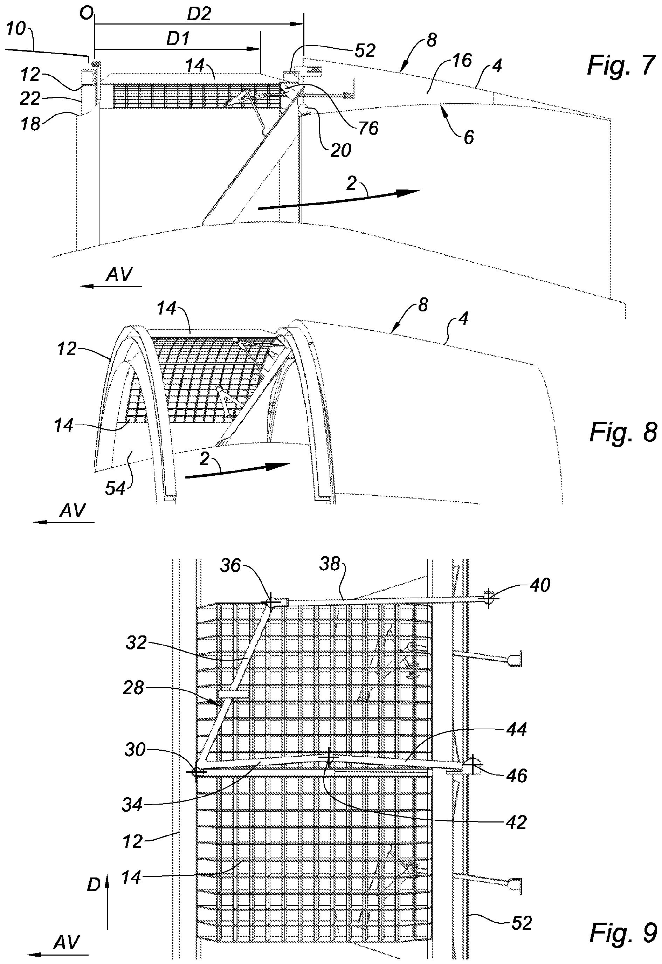

Les figures 7, 8 et 9 présentent un déplacement suivant vers l'arrière de la grille 14, sur une course complémentaire représentant 100 % de son déplacement total.

Le recul complémentaire des grilles 14 a provoqué un recul identique du pivot de grille 46, entraînant un pivotement vers l'arrière du premier levier 28. La bielle de grille 44 forme maintenant avec le bras arrière 34 de ce levier 28 un angle sensiblement plat.

Parallèlement, le bras avant 32 du premier levier 28 a pivoté vers l'arrière, et forme avec la bielle de capot 38 un angle obtus d'environ 120°. La bielle de capot 38 déplace vers l'arrière son pivot de capot 40 ainsi que les capots mobiles 4, pour obtenir une course totale de ces capots D2 supérieure à la course des grilles D1.

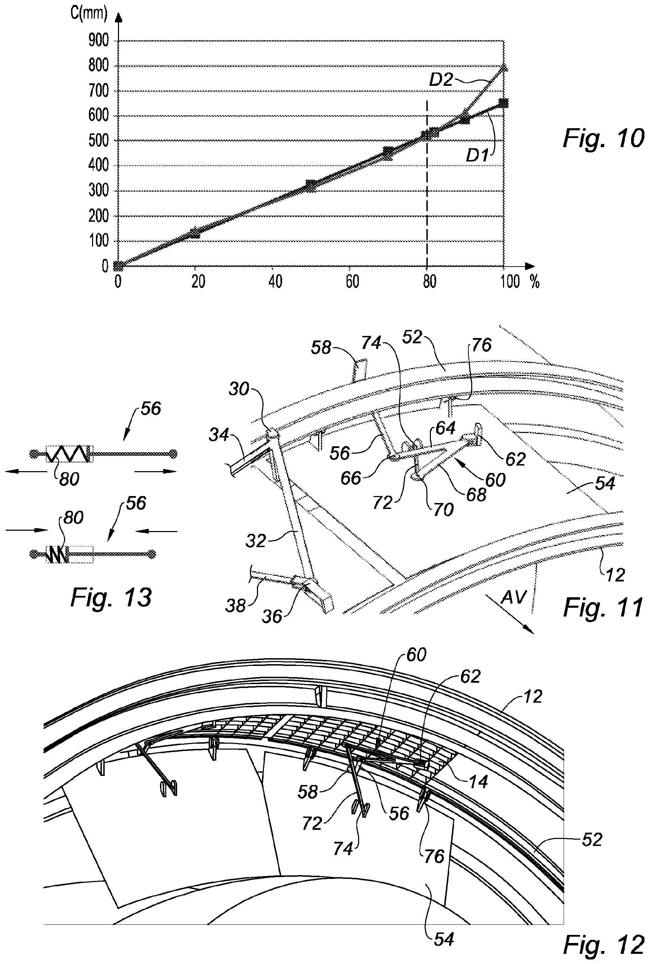

La géométrie du premier levier 28 et des bielles 38, 44 donnent à la fin de ce déplacement une course plus importante des capots 4 par rapport à celle des grilles 14, présentée figure 10. En effet la mise à plat de l'angle formé entre la bielle de grille 44 et le bras arrière 34 réalise un petit déplacement des grilles 14, alors que le mouvement du bras avant 32 tourné sensiblement vers la droite, provoque un fort déplacement de la bielle de capot 38 et de son pivot de capot 40 par rapport aux grilles.

Les figures 11 et 12 présentent les volets basculants 54 fixés chacun par deux charnières arrière 76 au cadre arrière 52.

Un mécanisme de commande disposé au-dessus de chaque volet, dans sa partie centrale entre les charnières 76, comporte un deuxième levier 60 formant un « V » disposé à plat sous une grille 14, comprenant un bras avant 68 et un bras arrière 64 formant entre eux un angle d'environ 30°. Le deuxième levier 60 est fixé à la grille 14 par un pivot 62 disposé à la jonction de ses deux bras 64, 68.

Une biellette arrière 56 présente une extrémité avant reliée par une première rotule 66 au bras arrière 64, et son extrémité arrière reliée par une deuxième rotule à une ferrure 58 liée aux capots mobiles 4.

Une biellette avant 72 présente une extrémité reliée par une troisième rotule 70 au bras avant 68, son autre extrémité étant reliée par une quatrième rotule 74 à la face supérieure du volet basculant 54, sensiblement au milieu de ce volet.

Le mécanisme de commande étant fixé d'une part à une grille 14 par le pivot 62, et d'autre part aux capots 4 arrière par la deuxième rotule, il est actionné par la différence de mouvement entre ces deux ensembles. Lors de la première course représentant plus de 70% du déplacement de l'actionneur et des grilles 14, avantageusement environ 80%, les volets basculants 54 ne se déploient pas.

Lors de la course complémentaire au-delà des 80% du déplacement, la biellette arrière 56 tire vers l'arrière le deuxième levier 60, qui est maintenu par son pivot 62.

Le deuxième levier 60 tire à son tour vers l'arrière la biellette avant 72, qui repousse vers le bas le volet mobile 54 par l'intermédiaire du cinquième pivot 74 fixé sur ce volet. On réalise un déploiement des volets mobiles 54 qui ferment en grande partie la veine annulaire d'air froid, en refoulant le flux radialement vers l'extérieur par l'intermédiaire des grilles 14.

On notera que chaque mécanisme de commande forme un dispositif compact restant intégré à plat entre une grille 14 et un volet mobile 54 dans la position fermée.

La figure 13 présente la biellette arrière 56 comprenant deux parties coulissantes axialement l'une par rapport à l'autre, reliées par un ressort hélicoïdal travaillant en compression 80 guidé dans un boîtier axial.

En début de déplacement des capots mobiles 4, la biellette arrière 56 est comprimée comme présenté en bas de la figure 13, et le ressort 80 est en compression ce qui maintient une force sur les volets mobile 54 qui les plaque vers le haut sur des butées, et évite des jeux et des vibrations de ces volets.

Le ressort 80 se comprime également dans les phases entre 0% et 70% pour lesquelles les capots mobiles 4 peuvent se trouver en avant des grilles 14.

En fin de déplacement des capots mobiles 4, la biellette arrière 56 travaille en traction en imposant la position abaissée des volets mobiles 54. Le ressort 80 est détendu.

Les mécanismes de commande disposés entre les capots mobiles 4 et les grilles 14, actionnent automatiquement les volets basculants 54 uniquement en fin de course de ces capots, sans nécessiter de systèmes d'actionnement autonome, ce qui simplifie la nacelle, réduit la masse et les coûts.

Les mécanismes de commande ainsi que les volets basculants 54 sont dans la position fermée entièrement intégrés au-dessus de la surface intérieure traitée acoustique 6 des capots mobiles 4, ils ne comportent pas d'élément venant dans la veine annulaire d'air froid 2, ce qui améliore l'aérodynamisme, et le garnissage de surface traitée acoustique dans cette veine.

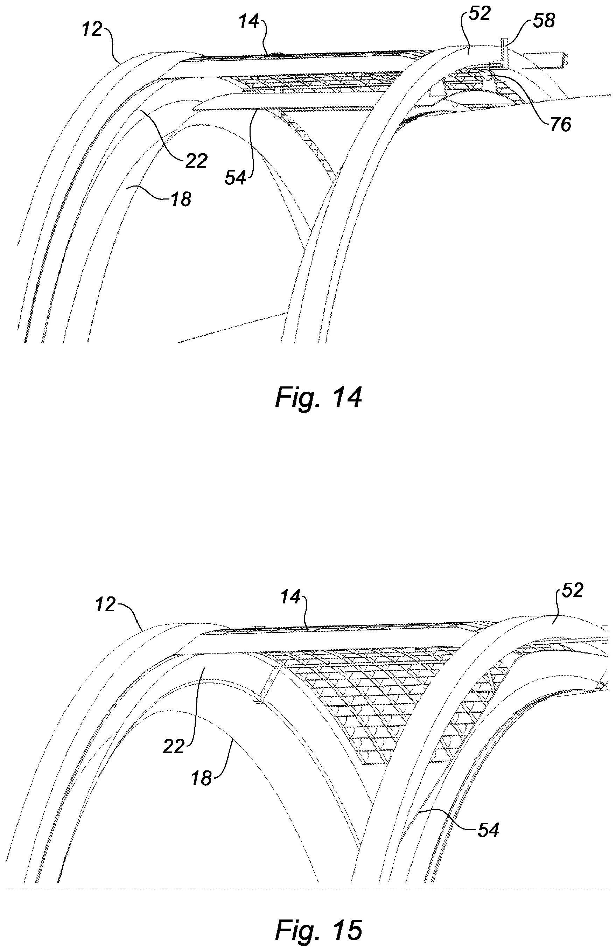

La figure 14 présente le bord de déviation fixe annulaire 18 disposé à l'intérieur des grilles 14, qui reste dans une position fixe.

La figure 15 présente un bord de déviation mobile annulaire 22, formant une couronne radiale fixée au cadre avant mobile 12 à l'intérieur des grilles 14.

Le bord de déviation mobile 22 vient s'ajuster radialement à l'extérieur du bord de déviation fixe 18 quand les grilles 14 sont entièrement déployées, afin de compléter une surface de déviation du flux radialement vers l'extérieur. On forme de cette manière une surface sensiblement continue et étanche pour guider l'écoulement d'air radialement vers l'extérieur, en évitant son passage vers l'avant en dessous des capots avant fixe 10.

## Revendications

1. Nacelle pour turboréacteur comportant un inverseur de poussée comprenant des grilles d'inversion de poussée (14) disposées autour de la nacelle, au moins un capot mobile (4) adjacent à ces grilles (14) dans une position fermée, un actionnement générant un mouvement de recul des grilles (14) ou du capot (4) vers une position ouverte, des systèmes de liaison reliant les capots mobiles (4) et les grilles (14), et des volets basculants (54) de fermeture de la veine annulaire d'air froid, chaque système de liaison étant disposé radialement à l'extérieur des grilles (14), comporte dans un plan tangentiel un levier (28), des bielles (38, 44), et des articulations autorisant un mouvement sensiblement dans ce plan, comprenant une articulation fixe (30) liée à la structure fixe de la nacelle, une articulation de grille (46) liée aux grilles (14) et une articulation de capot (40) liée au capot mobile (4), ce système de liaison donnant en fin de mouvement d'ouverture une course du capot mobile (4) plus importante que celle des grilles (14), **caractérisé en ce que** le levier (28), dit premier levier (28), comprend deux bras (32, 34) formant un « V », et deux bielles (38, 44) fixées chacune à l'extrémité d'un bras par une articulation (36, 42).

2. Nacelle selon la revendication 1, **caractérisée en ce que** la course du capot mobile (4) est plus importante que celle des grilles (14) à partir d'un mouvement de recul de ces grilles (14) dépassant les 70% du recul total.

3. Nacelle selon la revendication 1 ou 2, **caractérisée en ce que** chaque levier (28) comporte une articulation fixe (30) disposée à la liaison des deux bras (32, 34), reliée à un élément fixe de la structure de la nacelle, un bras arrière (34) étant relié par une bielle de grille (44) à une articulation (46) fixée aux grilles (14), un bras avant (32) étant relié par une bielle de capot (38) à une articulation (40) fixée au capot mobile (4).

4. Nacelle selon la revendication 3, **caractérisée en ce que** dans la position fermée chaque bielle (38, 44) forme avec le bras le supportant (32, 34), un angle aigu.

5. Nacelle selon la revendication 4, **caractérisée en ce que** dans la position entièrement ouverte la bielle de grille (44) forme avec le bras arrière (34) un angle sensiblement plat, et la bielle de capot (38) forme avec le bras avant (32) un angle obtus.

6. Nacelle selon l'une quelconque des revendications précédentes, **caractérisée en ce qu'**elle comporte des mécanismes de commande des volets basculants (54), qui dans la position fermée sont entièrement intégrés au-dessus de la surface intérieure (6) de la veine d'air froid.

7. Nacelle selon la revendication 6, **caractérisée en ce que** chaque mécanisme de commande d'un volet basculant (54) est relié uniquement au capots mobiles (4) et aux grilles (14), en étant actionné par un mouvement relatif entre ces deux ensembles.

8. Nacelle selon la revendication 7, **caractérisée en ce que** chaque mécanisme de commande comporte un deuxième levier (60) fixé par une articulation (62) aux grilles (14), relié par une première biellette (56) aux capots mobiles (4), et relié par une deuxième biellette (72) à un volet basculant (54).

9. Nacelle selon l'une quelconque des revendications précédentes, **caractérisée en ce qu'**elle comporte un bord de déviation formant un guidage annulaire de l'air froid disposé à l'avant des grilles (14), comprenant une partie radialement extérieure mobile (22) fixée à l'avant des grilles (14), qui s'ajuste dans la position ouverte sur une partie radialement intérieure fixe (18) afin de réaliser une surface sensiblement continue.

## Patentansprüche

1. Gondel für ein Turbotriebwerk, aufweisend eine Schubumkehr, umfassend um die Gondel angeordnete Schubumkehrgitter (14), mindestens eine zu diesen Gittern (14) bewegliche Haube (4) in einer geschlossenen Position, wobei eine Betätigung eine Rückzugsbewegung der Gitter (14) oder der Haube (4) in eine geöffnete Position erzeugt, Verbindungssysteme, die die beweglichen Hauben (4) und die Gitter (14) verbinden, und Klappbleche (54) zum Verschließen des ringförmigen Kaltluftkanals, wobei jedes Verbindungssystem, das radial außerhalb der Gitter (14) angeordnet ist, in einer tangentialen Ebene einen Hebel (28), Stangen (38, 44) und Gelenke aufweist, die eine Bewegung etwa in dieser Ebene gestatten, umfassend ein festes Gelenk (30), das mit der festen Struktur der Gondel verbunden ist, ein Gittergelenk (46), das mit den Gittern (14) verbunden ist und ein Haubengelenk (40), das mit der beweglichen Haube (4) verbunden ist, wobei dieses Verbindungssystem am Ende der Öffnungsbewegung einen größeren Lauf der beweglichen Haube (4) als den der Gittern (14) verursacht, **dadurch gekennzeichnet, dass** der als erster Hebel (28) bezeichnete Hebel (28) zwei Arme (32, 34) umfasst, die ein "V" bilden, und zwei Stangen (38, 44), die durch ein Gelenk (36, 42) jeweils an einem Ende eines Arms befestigt sind.

2. Gondel nach Anspruch 1, **dadurch gekennzeichnet, dass**, ausgehend von einer Rückzugsbewegung dieser Gitter (14), die 70 % des Rückzugs insgesamt überschreitet, der Lauf der beweglichen Haube (4) größer als der der Gitter (14) ist.

3. Gondel nach Anspruch 1 oder 2, **dadurch gekennzeichnet, dass** jeder Hebel (28) ein festes Gelenk (30) aufweist, das an der Verbindung der zwei Arme (32, 34) angeordnet ist, verbunden mit einem festen Element der Struktur der Gondel, wobei ein hinterer Arm (34) durch eine Gitterstange (44) mit einem an den Gittern (14) befestigten Gelenk (46) verbunden ist, wobei ein vorderer Arm (32) durch eine Haubenstange (38) mit einem an der beweglichen Haube (4) befestigten Gelenk (40) verbunden ist.

4. Gondel nach Anspruch 3, **dadurch gekennzeichnet, dass** jede Stange (38, 44) in der geschlossenen Position mit dem sie tragenden Arm (32, 34) einen spitzen Winkel bildet.

5. Gondel nach Anspruch 4, **dadurch gekennzeichnet, dass** die Gitterstange (44) in der vollkommen geöffneten Position mit dem hinteren Arm (34) einen etwa flachen Winkel bildet und die Haubenstange (38) mit dem vorderen Arm (32) einen stumpfen Winkel bildet.

6. Gondel nach einem der vorangehenden Ansprüche, **dadurch gekennzeichnet, dass** sie Steuermechanismen der Klappbleche (54) aufweist, die in der geschlossenen Position vollkommen auf der unteren Oberfläche (6) des Kaltluftkanals integriert sind.

7. Gondel nach Anspruch 6, **dadurch gekennzeichnet, dass** jeder Steuermechanismus eines Klappblechs (54) nur mit den beweglichen Hauben (4) und mit den Gittern (14) verbunden ist, wobei er durch eine relative Bewegung dieser beiden Einheiten betätigt wird.

8. Gondel nach Anspruch 7, **dadurch gekennzeichnet, dass** jeder Steuermechanismus einen zweiten Hebel (60) aufweist, der durch ein Gelenk (62) an den Gittern (14) befestigt ist, verbunden durch einen ersten Steg (56) mit den beweglichen Hauben (4) und verbunden durch einen zweiten Steg (72) mit einem Klappblech (54).

9. Gondel nach einem der vorangehenden Ansprüche, **dadurch gekennzeichnet, dass** sie einen Ablenkungsrand aufweist, der eine ringförmige Kaltluftführung bildet, die vor den Gittern (14) angeordnet ist, umfassend einen radial äußeren beweglichen Teil (22), der vorn an den Gittern (14) befestigt ist, der sich in der geöffneten Position an einen radial inneren festen Teil (18) anpasst, um eine etwa kontinuierliche Oberfläche zu bilden.

## Claims

1. A nacelle for a turbojet engine including a thrust reverser comprising thrust reverser cascades (14) disposed around the nacelle, at least one movable cowl (4) which is adjacent to these cascades (14) in a closed position, an actuation generating a recoil movement of the cascades (14) or of the cowl (4) towards an open position, connection systems connecting the movable cowls (4) and the cascades (14), and tilting flaps (54) for closing the annular cold air flow path, each connection system being disposed radially outside the cascades (14), includes, in a tangential plane, a lever (28), connecting rods (38, 44), and hinges allowing a movement substantially in this plane, comprising a fixed hinge (30) linked to the fixed structure of the nacelle, a cascade hinge (46) linked to the cascades (14) and a cowl hinge (40) linked to the movable cowl (4), this connection system giving, at the end of the opening movement, a stroke of the movable cowl (4) which is greater than that of the cascades (14), **characterized in that** the lever (28), called first lever (28), comprises two arms (32, 34) forming a « V », and two connecting rods (38, 44) each fastened to the end of an arm by a hinge (36, 42).

2. The nacelle according to claim 1, **characterized in that** the stroke of the movable cowl (4) is greater than that of the cascades (14) from a recoil movement of these cascades (14) exceeding 70% of the total recoil.

3. The nacelle according to claim 1 or 2, **characterized in that** each lever (28) includes a fixed hinge (30) disposed at the connection of the two arms (32, 34), connected to a fixed element of the structure of the nacelle, a rear arm (34) being connected by a cascade connecting rod (44) to a hinge (46) which is fastened to the cascades (14), a front arm (32) being connected by a cowl connecting rod (38) to a hinge (40) which is fastened to the movable cowl (4).

4. The nacelle according to claim 3, **characterized in that**, in the closed position, each connecting rod (38, 44) forms with the arm supporting it (32, 34), an acute angle.

5. The nacelle according to claim 4, **characterized in that**, in the fully open position, the cascade connecting rod (44) forms with the rear arm (34) a substantially flat angle, and the cowl connecting rod (38) forms with the front arm (32) an obtuse angle.

6. The nacelle according to any one of the preceding claims, **characterized in that** it includes mechanisms for controlling the tilting flaps (54), which in the closed position are fully integrated above the inner surface (6) of the cold air flow path.

7. The nacelle according to claim 6, **characterized in that** each mechanism for controlling a tilting flap (54) is connected only to the movable cowls (4) and the cascades (14), by being actuated by a relative movement between these two sets.

8. The nacelle according to claim 7, **characterized in that** each control mechanism includes a second lever (60) which is fastened by a hinge (62) to the cascades (14), connected by a first connecting rod (56) to the movable cowls (4), and connected by a second connecting rod (72) to a tilting flap (54).

9. The nacelle according to any one of the preceding claims, **characterized in that** it includes a deflection edge forming an annular guide of the cold air disposed in front of the cascades (14), comprising a movable radially outer portion (22) fastened to the front of the cascades (14), which fits into the open position on a fixed radially inner portion (18) in order to make a substantially continuous surface.
